(19) Europäisches Patentamt / European Patent Office / Office européen des brevets

(11) **EP 3 647 587 B1**

(12) **EUROPEAN PATENT SPECIFICATION**

(45) Date of publication and mention
of the grant of the patent:
**11.02.2026 Bulletin 2026/07**

(21) Application number: **18203951.1**

(22) Date of filing: **01.11.2018**

(51) International Patent Classification (IPC):
**F03D 7/04** *(2006.01)*

(52) Cooperative Patent Classification (CPC):
**F03D 7/045;** F05B 2260/821; Y02E 10/72

(54) **METHOD FOR CONTROLLING A WIND TURBINE AND CORRESPONDING WIND TURBINE**

VERFAHREN ZUM STEUERN EINER WINDTURBINE UND ENTSPRECHENDE WINDTURBINE

PROCÉDÉ DE COMMANDE D'UNE ÉOLIENNE ET ÉOLIENNE CORRESPONDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.05.2020 Bulletin 2020/19**

(73) Proprietor: **Wobben Properties GmbH
26607 Aurich (DE)**

(72) Inventor: **de Bot, Dennis
3831 SK Leusden (NL)**

(74) Representative: **Eisenführ Speiser
Patentanwälte Rechtsanwälte PartGmbB
Postfach 10 60 78
28060 Bremen (DE)**

(56) References cited:
EP-A1- 3 158 190          EP-A1- 3 250 820
EP-A2- 2 292 928          EP-B1- 3 158 190
EP-B1- 3 250 820          WO-A2-2009/153614
CA-A1- 3 011 771          US-A- 5 155 375
US-A1- 2012 078 518       US-A1- 2015 292 483

- BEHERA ANSHU ET AL: "Multi-objective Optimal
Tuning of the Multi-loop Pitch Control Systems
of a Wind Turbine", 2018 ANNUAL AMERICAN
CONTROL CONFERENCE (ACC), AACC, 27 June
2018 (2018-06-27), pages 3068 - 3073,
XP033384579, [retrieved on 20180809], DOI:
10.23919/ACC.2018.8431803

**Description**

The present invention is directed to a method for controlling a wind turbine and it is directed to a corresponding wind turbine.

Wind turbines are well-known and one task of further developing wind turbines is to improve its efficiency. The efficiency depends on the wind speed and in particular on how adequate the wind turbine is adapted to the present wind speed.

One general problem is that measuring the wind speed is either not very precise or expensive. Accordingly, it is common to use methods of controlling the operational mode of the wind turbine without measuring the wind speed. The underlying idea is that the wind power installation as such is a good wind sensor. Accordingly, the wind turbine can be controlled just based on the rotational speed and the produced power. These two values can thus be used to set an operating point matching the present wind condition. Instead or in addition of using the generated power the generator torque can be used as well.

However, this has the disadvantage that the wind speed is not directly known and thus the set operating point is basically just believed to be the optimal operating point for the present wind conditions which are however not directly known.

WO 2009/153614 A2 is directed to a turbine control system for a variable speed electrical generator in a wind turbine.

US 5,155,375 A is directed to a controller and method for operating a variable speed turbine. The object of this document is to better track wind speed fluctuations for greater efficiency. US 5,155,375 A has a wind speed observer whereas its output is used for selecting parameters such as desired rotor speed, desired torque and desired pitch angle.

EP 3 158 190 A1 is directed to a control system for thrust limiting of wind turbines. A wind speed estimator outputs an estimated wind speed.

US 2012/078518 A1 determines a current wind speed based on current blade pitch angles, current rotor speed and current power. The determined wind speed is just the basis for determining a maximum power or available maximum power.

EP 3 250 820 A1 is directed to a method for controlling a wind turbine in partial and full-load. It also discloses a control system for each operating mode. There is a transition function provided to change over from one mode into the other.

CA 3 011 771 A1 is directed to observing a wind speed. This document observes the available power, in particular for grid services when the wind power installation deviates from the optimal working point according to provisions of the grid, which might be the cause for changing the output power.

US 2015/292483 A1 discloses generating a setpoint for rotor thrust based on the estimated wind speed.

Accordingly, it is an object of the present invention to address the above-identified problems. In particular, it is an object of the present invention to improve the operating of a wind turbine. There shall at least a solution be provided which is an alternative solution with respect to known solutions.

According to the invention a method according to claim 1 is suggested. This method is directed for controlling a wind turbine. The wind turbine which is controlled has a generator with controllable generator torque and an aerodynamic rotor with rotor blades with adjustable pitch angle. The aerodynamic rotor drives the generator with variable rotor speed depending on the wind speed. Accordingly, underlying the suggested control method is a wind turbine with adjustable rotor blades and with a variable rotor speed.

The method comprises the steps of operating the wind turbine in a subrated mode when the wind speed is below a predetermined rated wind speed and operating the wind turbine in a rated mode when the wind speed is at or above the predetermined rated wind speed. Accordingly, there are at least these two different operating modes distinguished, i.e. a subrated mode for small wind speeds and a rated mode for higher wind speeds, in particular for wind speeds of a rated wind speed or a wind speed above that. The rated mode may also be denoted as rated condition or full load mode. The subrated mode may also be denoted as subrated condition or partial load mode.

The method further suggests to estimate the wind speed and to operate the wind turbine in subrated mode or in rated mode depending on the estimated wind speed. Accordingly, this decision whether the wind turbine is operated in subrated mode or in rated mode is based on an estimated wind speed. The estimation of the wind speed can involve operating conditions of the wind turbine, such as generated power and the rotational speed. This way the estimating of the wind speed may still avoid a direct measurement of wind speed, but nevertheless a value for the wind speed is determined and can be used for operating and controlling the wind turbine. By using such wind speed value there is a direct information of the wind condition and that enables the control method to better adapt the control to the wind conditions. The estimated wind speed can also be used for diagnostic and statistical purposes.

One advantage of using the estimated wind speed instead of using the rotor speed or the generated power for setting an operating point is that the rotor speed and the generator power depend on the selected operating point and thus such method basically needs a state of equilibrium, whereas the estimated wind speed is readily available.

Accordingly, using the estimated wind speed avoids a direct measurement but also avoids to not take the wind speed as a control value into account. In this way switching between subrated mode and rated mode can be done quite precisely and accordingly the most adequate operating mode can be chosen. It is also important to note that controlling the wind turbine in subrated mode on the one hand and in rated mode on the other hand is quite different, it will be described below, and thus a good criterion for choosing between these two operating modes can be quite important in order to pick the best operating mode.

According to a further aspect it is suggested to operate the wind turbine in a transient mode, when the operating mode changes from subrated mode to rated mode or back. That shall also depend on the estimated wind speed. Accordingly, it is suggested to operate the wind turbine in subrated mode, in transient mode or in rated mode depending on the estimated wind speed. Accordingly, the estimated wind speed is the base for deciding which of said three modes is selected.

The subrated mode is particularly directed to a mode in which there is not enough wind in order to operate the wind turbine at its rated power level. Accordingly, in subrated mode the wind turbine operation aims to control the wind power installation such that as much power is produced as possible.

In rated mode the wind turbine particularly operates at or above rated wind speed and thus the operational control basically aims to keep the output power at a rated level in order to avoid any short term or long term damage to the wind turbine. One important control feature is to adjust the blade angles of the rotor blades such that the output power does not or at least not significantly exceeds rated power.

However, in the transient mode the wind speed is almost at rated wind speed whereas the rotor blades have not yet been pitched and thus the rotor blades receive the maximum wind force. Accordingly, the rotor blades receive a maximum load in the switch over range when switching over from subrated mode to rated mode. In order to take this maximum load in this range into account said transient mode is suggested. In order to have this transient mode activated at the appropriate wind speed, using the estimated wind speed for selecting the transient mode is suggested.

According to a further aspect the method further comprising the steps

- measuring the rotor speed,

- in subrated mode

    - determining a set value for the pitch angle depending on the measured rotor speed, and/or

    - determining a generator torque setpoint based on the measured rotor speed,

- adjusting the pitch angles of the rotor blades depending on the set value for the pitch angle and/or

- adjusting the generator torque depending on the determined torque setpoint.

Accordingly, measuring the rotor speed is suggested as a first step. The further steps are related to the subrated mode. And accordingly a set value for the pitch angle is determined depending on the measured rotor speed according to one aspect. Accordingly, in subrated mode the pitch angle is not fixed. This is contrary to well-known methods of operating a wind turbine in subrated mode. The conventional way suggests to have an optimal pitch angle which is optimal for the complete subrated mode.

However, according to the present invention it was realized that even in subrated mode the operation of the wind turbine can be improved by adjusting the pitch angle. The input value in order to adjust the pitch angle is the measured rotor speed. That has the advantage that the rotor speed can be measured quite precisely and the rotor speed is also having less or smaller fluctuations at least when compared to changes in the wind speed.

Alternatively, or additionally a generator torque is adjusted depending on the measured rotor speed. Accordingly, the operating point is defined, at least inter alia, by a generator torque setpoint and the rotor speed. The generator torque can be adjusted by controlling the stator currents generated by the generator. However, in case a generator with controllable excitation is used, the torque can also be adjusted by using such excitation control.

It is particularly advantageous if the pitch angle and the generator torque is determined and adjusted depending on the measured rotor speed. In this way an adequate operational point for operating the wind turbine can be found and set in the subrated mode. Accordingly, an operating point in the subrated mode may be defined by the actual rotor speed, the actual pitch angle and the actual generator torque. This way at least two parameters are used to find such optimal operating point, i.e. the pitch angle and the generator torque. In a stationary operating point the rotational speed, the generator torque and the generated power are interrelated physically. Accordingly, instead of setting the generator torque the generated power could also be used instead. However, it is preferred to set the generator torque as this is a more direct parameter of the generator operating point. It is also important to note that a direct interrelation between rotor speed, generator torque and generated power is only given in a stationary operating point. Whenever the rotor speed changes these three parameters are not directly interrelated anymore, as in that situation the inertia of the rotor must be taken into account as well.

According to one aspect at least in subrated mode the set value for the pitch angle is determined based on a predetermined relationship between the rotor speed values and pitch angle values. Accordingly, such relationship is predetermined according to known characteristics or according to simulations done beforehand and this predetermined known relationship is used to determine the particular set value for the pitch angle for a current operating point. According to the invention a look-up-table is used. In such look-up-table said predetermined relationship can be stored for a plurality of rotor speed values. Accordingly, in order to determine a set value for the pitch angle such pitch angle is taken from said look-up-table stored for the particular rotor speed. For operating points between two adjacent values in the look-up-table for the rotor speed, intermediate values may be received by interpolating.

Preferably, the generator is designed as a direct driven synchronous generator, in particular having a generator with permanent magnets. For such permanent excited direct driven synchronous generator, the generator torque can be adjusted by controlling the generated stator currents. Such direct driven synchronous generator with permanent excitation avoids any power loss for controlling the excitation.

According to one aspect at least in subrated mode and in rated mode a wind speed is estimated and based on the estimated wind speed a rotor thrust of the aerodynamic rotor is controlled in order to limit a maximum rotor thrust or maximum rotor thrust change. This is in particular performed in such a way that a rotor thrust setpoint is determined based on the estimated wind speed.

It is thus further suggested to use the estimated wind speed to control a further state of the wind turbine, i.e. the rotor thrust, in order to control the operation of the wind turbine or in order to facilitate the control. The rotor thrust is at least one important indicator of a load on the wind turbine. In order to avoid any overload the rotor thrust and in addition or alternatively a rotor thrust change is limited with respect to a maximum value. Such limit or limits can in particular form an auxiliary condition for the control of the wind turbine. In particular, the wind turbine can be controlled based on the rotor speed by adjusting the generator torque and the pitch angle, but in addition said limits of the rotor thrust or rotor thrust change are observed. Accordingly, if such limits are reached or exceeded, the control may react on this in order to lower the rotor thrust or rotor thrust change and such control of lowering the rotor thrust or rotor thrust change may overrule the existing control of the operational point.

One preferred possibility to limit such rotor thrust or rotor thrust change is to determine a rotor thrust setpoint. Such rotor thrust setpoint may be below a given maximum rotor thrust value in order to have a safety distance to the maximum limit. Such safety distance may be smaller for small wind speeds and thus for small estimated wind speeds. It may also be small for wind speeds and thus estimated wind speeds with few or without turbulences. On the other hand for high wind speeds and/or wind speeds with high turbulences the safety distance may be larger and thus the rotor thrust setpoint may be selected accordingly. The rotor thrust setpoint can also have an influence on the rotor thrust change. An operating point at a high rotor thrust may also be object to high rotor thrust changes.

Preferably such rotor thrust limitations as explained may also be suggested for a transient mode.

According to a further aspect at least in rated mode and/or in transient mode, when the operating mode changes over from subrated mode to rated mode, the rotor speed is controlled based on a rotor speed setpoint and the rotor speed setpoint is determined depending on an estimated wind speed. Accordingly, the wind speed is estimated and depending on the estimated wind speed a rotor setpoint is determined. Then the rotor speed is controlled based on said rotor speed setpoint, i.e. the rotor speed is basically controlled in order to reach the rotor speed setpoint. However, it is also possible that the control for controlling the rotor speed is not necessarily aiming to having a stationary accuracy of zero, but may accept a small deviation, as is generally known for a P-control. However, also a PI-control may be used in order to avoid any difference between rotor speed and rotor speed setpoint.

Such control is particularly advantageous in transient mode, as in transient mode the rotor speed may be below rated rotor speed. Accordingly, the rotor speed is not fixed yet. In order to provide a rotor speed setpoint and to control the wind turbine based on such rotor speed setpoint the generator torque as well as the pitch angle may be adjusted, at least either one of these values is adjusted. Such control concept of controlling the rotor speed and the transient mode has the advantage of guiding the operational point of the wind turbine from subrated mode to rated mode. This way there is a precise lead for the operational point of the wind turbine in this critical range. As explained above the load on the wind turbine, at least on the rotor blades by the wind may have its maximum just before entering the rated mode. Accordingly, it is suggested to closely control the wind turbine in this critical range.

However, such control of the rotor speed using a rotor speed setpoint may also be used in rated mode. In rated mode the wind turbine may often be controlled such that the rotor speed is at rated rotor speed. However, in particular conditions or in particular ranges, such as at the beginning of the rated mode, i.e. close to subrated mode, or at the end of the rated mode, i.e. close to a storm mode where the wind speed is close to a wind storm, different rotor speed setpoints may be chosen.

In particular for wind speeds and thus for estimated wind speeds, being above rated wind speed but not much above rated wind speed, the rotor speed may be above rated wind speed. In particular for wind speeds which are at most up to 30% above rated wind speed, a rotor speed above rated rotor speed can be chosen. A further or additional possibility is to nevertheless have the rotor speed at rated rotor speed and increase the rotor speed, i.e. increase the setpoint for the rotor speed, at wind speeds slightly above rated wind speed. In particular the rotor speed may be at rated rotor speed for estimated wind speeds of rated wind speed up to 10% above rated wind speed, whereas the rotor speed and thus the rotor speed setpoint is above rated rotor speed for wind speeds in a range from 10% above rated wind speed up to 30% above rated wind speed. For higher wind speeds the rotor speed may again be at rated rotor speed, i.e. the rotor speed setpoint may be set to rated rotor speed for wind speeds above 30% above rated wind speed.

According to a further aspect at least in rated mode and/or in transient mode the rotor power is controlled based on a rotor power setpoint and the rotor power setpoint is determined depending on estimated wind speed. Rotor power is the aerodynamic power acting on the rotor. The rotor power may be computed by means of the rotor speed measurement, pitch angle measurement and wind speed estimation.

In particular for the transient mode the wind turbine can this way be controlled quite precisely in this critical range. The estimated wind speed is the input value for this control. Underlying this control concept is also the idea that the rotor power which can be generated at certain wind speeds is generally known. Accordingly, if the rotor power setpoint is determined depending on an estimated wind speed is assumed that such rotor power setpoint is an adequate operating point for the corresponding wind speed. As a result the wind turbine can also well be controlled at such rotor power setpoint.

In rated mode the rotor power is usually set to rated power. However, according to particular conditions or ranges it might make sense to exceed such rated power or to keep the power below such rated power. In particular for wind speeds slightly above rated wind speed, in particular in a range between 10% and 30% above rated wind speed it can be advantageous to select a rotor power above rated power.

Preferably, the rotor speed and the rotor power are controlled based on the estimated wind speed. Accordingly, the wind speed is estimated and based on that a rotor speed setpoint as well as a rotor power setpoint is selected. Accordingly, the wind turbine is controlled in an operating point defined by the rotor speed and the rotor power. One possibility is to control the generator torque based on a look-up table. The input of the look-up table may be the rotor speed.

According to one aspect for starting the wind turbine a set value for the pitch angle is determined based on a predetermined relationship between rotor speed values and pitch angle values. A wind turbine is started once the wind speed is above a starting wind speed. This wind speed may be estimated or measured. Its exact value is not very important as long as it is clear that there is enough wind to start the wind turbine. In that case and if any other additional conditions are met the rotor blades are pitched basically from a passive or feathered position or from an idling pitch angle towards an operational pitch angle. This is controlled such that the pitch angle is decreased resulting in the aerodynamic rotor to start moving or to start moving faster if the rotor was idling. Accordingly, a rotor speed results and this rotor speed is according to the predetermined relationship between rotor speed values and pitch angle values used as an input value leading to a new pitch angle. Such new pitch angle again leads to a further increase of the rotor speed and accordingly also a new set value for a blade angle results and so on. This way the starting process can be controlled instead of just turning the rotor blades into an operational position with a particular blade angle.

According to the invention this is done by using a look-up-table wherein the pitch angle is reduced with increasing rotor speed. Of course instead of using a look-up-table there could also be an analytic function or other way of describing such relationship according to which the pitch angle is reduced with increasing rotor speed.

In particular it is suggested starting with an idling pitch angle of more than 20° until an operational pitch angle of less than 10° has been reached. Accordingly, the pitch angle can be firstly turned to an idling pitch angle without considering the rotor speed, but once the idling pitch angle is reached or undercut, any further change of the pitch angle is done in dependence of increasing rotor speed.

If a look-up-table is used, any intermediate values can also be used involving interpolation between existing values in the look-up-table.

According to a further aspect it is suggested that at least one of the following steps, or all of the following steps are used, namely:

- for controlling the pitch angle in subrated mode a pitch angle pitch rate setpoint is determined based on a pitch angle setpoint,
- for controlling the rotor speed at least in rated mode a rotor speed pitch rate setpoint is determined based on a rotor speed setpoint,
- for controlling a rotor power at least in rated mode a rotor power pitch rate setpoint is determined based on a rotor power setpoint, and
- for controlling a rotor thrust a rotor thrust pitch rate setpoint is determined based on a rotor thrust setpoint.

Accordingly, the principle of this concept is to provide pitch rate setpoints in order to control all said values, i.e. to use a pitch rate setpoint for controlling the pitch angle, for controlling the rotor speed, for controlling the rotor power and for controlling a rotor thrust. For each of these control values different pitch rate setpoints are determined. As a result, a plurality of pitch rate setpoints must be put into practice. In particular, one task might be to merge the plurality of pitch rate setpoints into one pitch rate setpoint. One simple way is to take the largest pitch rate setpoint. However, preferably each pitch rate setpoint, i.e. the pitch angle pitch rate setpoint, the rotor speed pitch rate setpoint, the rotor power pitch rate setpoint and the rotor thrust pitch rate setpoint have different priorities. In particular the rotor thrust may have the highest priority but it may also only define a maximum pitch rate setpoint. Accordingly, the rotor thrust pitch rate setpoint may just define, according to its absolute value, an upper limit. Of course if the rotor thrust pitch rate setpoint is negative, any pitch rate shall not go below this negative value.

According to one embodiment the rotor thrust pitch rate setpoint is always relevant in a way that it defines by its absolute value a maximum. Besides that the blade angle is controlled by the remaining pitch rate setpoints. In case of a subrated mode only the pitch angle pitch rate setpoint may be relevant in addition to the rotor thrust pitch rate setpoint. According to this embodiment the rotor speed pitch rate setpoint as well as the rotor power pitch rate setpoint are disabled. On the other hand, during rated mode the pitch angle pith rate setpoint may be disabled. If the rotor speed pitch rate setpoint and the rotor power pitch rate setpoint are to be considered at the same time an arithmetic value of both may be chosen.

However, according to the above concept explained with respect to some embodiments the pitch rate forms a major control value in order to control the wind turbine.

According to one aspect the rotor speed pitch rate setpoint and the rotor power pitch rate setpoint are add together in a weighted function.

According to one aspect the pitch angle is adjusted based on at least one input variable or all input variables of the list consisting of

- a measured pitch angle,

- a pitch angle pitch rate setpoint,

- a rotor speed pitch rate setpoint,

- a rotor power pitch rate setpoint, and

- a rotor thrust pitch rate setpoint, wherein in particular

- the rotor thrust pitch rate setpoint provides a minimum limit having an absolute value that may not be undercut.

In particular, the pitch angle is adjusted based on a measured pitch angle and based on one or several pitch rate setpoints. Using the measured pitch angle and thus the current pitch angle provides for each adjustment step a good starting position in order to better control the adjustment process towards a new pitch angle.

Other than that the adjustment of the pitch angle is controlled by means of controlling a pitch rate. Accordingly, such pitch rate can be controlled or set based on a pitch rate setpoint which may be derived from a plurality of pitch rate setpoints.

In particular, the rotor thrust pitch rate setpoint provides a minimum in order to avoid any too large rotor thrust. In this way too high mechanical loads may be avoided. One possibility to consider the rotor thrust pitch rate setpoint and at least one further pitch rate setpoint is that the further pitch rate setpoint is basically used in order to control the adjustment of the blade, whereas the rotor thrust pitch rate setpoint is only considered as a limit. Therefore, as far as the remaining pitch rate setpoint is above the rotor thrust pitch rate setpoint, the rotor thrust pitch rate setpoint is not relevant. This way the rotor thrust pitch rate setpoint may in case of a gust command a minimum pitch rate in order to quickly pitch the blades out of the wind. Any further smaller pitch rate set point will thus be ignored to avoid that the blades will be pitched out of the wind too slowly.

According to a further aspect a rotor power is controlled in a feed-forward control based on a rotor power setpoint. According to one aspect this feed-forward control may be further based on at least one input variable or all input variables of the list consisting of

- a measured rotor speed,

- a measured pitch angle, and

- an estimated wind speed.

Accordingly, a feed-back loop is avoided and the rotor power is particularly only adjusted based on the measured rotor speed, the measured pitch angle and the estimated wind speed. In particular, these three variables may quite clearly define an operating point and can thus be a good basis for the rotor power. However, even though a feed-forward control is used, this control may be a dynamical process or the rotor power setpoint may be clearly allocated to each particular combination of the measured rotor speed, the measured pitch angle and the estimated wind speed. This could be provided in a look-up-table and for intermediate values an interpolation may be used.

As a further aspect it is suggested that a rotor thrust is controlled in a feed-forward control based on a rotor thrust setpoint. Accordingly, a setpoint is given and the rotor thrust is controlled without feedback. According to one aspect such control of the rotor thrust is further based on at least one input variable or all input variables of the list consisting of

- a measured rotor speed,

- a measured pitch angle, and

- an estimated wind speed.

These three variables may also quite accurately define a rotor thrust and may thus also be used to find a rotor thrust setpoint. If the rotor thrust is, regarding its absolute value, above a given limit and thus above a rotor thrust setpoint the rotor speed and/or the pitch angle may be reduced. The resulting new values for the measured rotor speed and the measured pitch angle in combination with the estimated wind speed may be used to provide a new rotor thrust setpoint or a new rotor thrust pitch rate setpoint.

According to one aspect it is suggested that in subrated mode the generator torque is adjusted based on a measured rotor speed, in transient mode the rotor power is increased with increasing wind speed based on the estimated wind speed and in rated mode rotor power is controlled to a constant value based on an estimated wind speed in a feed-forward control and in addition or alternatively a rotor thrust setpoint is decreasing with increasing wind speed and is set based on the estimated wind speed.

Accordingly, there are particular control concepts for the subrated mode, the transient mode and the rated mode respectively. It is clearly distinguished between these three modes and each mode involves a particular concept specifically adapted for each particular mode. This concept is underlying that in subrated mode the load on the wind turbine in particular on the rotor is less relevant and the rotor speed is variable and thus providing a good basis for adjusting the generator torque. In subrated mode an often change of the rotor speed is also expected and accordingly the generator torque is proportional to the generator power. It was found that according to that controlling the generator in subrated mode by adjusting the generator torque provides a more stable control concept.

In transient mode the rotor speed and the output power is coming close to rated speed or rated power respectively. The rotor power as well as the generator torque may be subject to large changes compared to small changes in the rotor speed. Accordingly, for transient mode it is suggested to increase the rotor power with increasing wind speed based on the estimated wind speed. It was found that the estimated wind speed may thus form a good basis for such adjustment.

In rated mode the power may be controlled to a constant value. It was found that this could be based on an estimated wind speed using a feed-forward control. Accordingly, the estimated wind speed is used and the measured rotor speed and the measured pitch angle may be used as well and this provides for a good control in a feed-forward control. In particular, any possible oscillations due to a feedback loop can be avoided. In addition, or alternatively a rotor thrust setpoint may also be set based on the estimated wind speed. This may also additionally take a measured rotor speed and a measured pitch angle into account. However, a feed-forward control may also be used in order to avoid oscillations of a feedback loop.

The present invention is also directed to a wind turbine. Such wind turbine has

- a generator with controllable generator torque and

- an aerodynamic rotor with rotor blades with adjustable pitch angle, wherein

- the aerodynamic rotor is adapted for driving the generator with variable rotor speed depending on a wind speed, further comprising

- a turbine control device for operating the wind turbine in a subrated mode when the wind speed is below a predetermined rated wind speed, and for

- operating the wind turbine in a rated mode when the wind speed is at or above the predetermined rated wind speed,

- an estimator for estimating the wind speed and wherein

- the turbine control device is adapted for operating the wind turbine in subrated mode or in rated mode in dependence of the estimated wind speed.

Accordingly, the turbine control device operates the wind turbine basically as described with respect to at least one embodiment or aspect of a method for controlling a wind turbine as explained above. Accordingly, there is also provided an estimator for estimating the wind speed. Accordingly, estimated wind speed can be used for controlling the wind turbine. The turbine control device may particularly be provided as a microcontroller. The estimator may also be provided as a microcontroller and it might be one option to combine the turbine control device and the estimator in one device, in particular in one microcontroller. The turbine control may be realized as one particular control program implemented on such microprocessor. The estimator may be implemented as another control program on that or a different microprocessor. Of course such programs may be interconnected. In particular, the estimated wind speed may be submitted to the turbine control device in order to form an input variable for the turbine control device. The turbine control device may also produce output values, such as a rotor power which may be used by the estimator.

An estimator for estimating the wind speed may be provided according to known concepts. In particular, the estimator may be designed as described in the patent application WO 2017/144631 A1.

Any advantages explained with respect to a method of controlling a wind turbine according to at least one embodiment or aspect explained above are also applicable to the proposed wind turbine.

The invention may now be explained by way of example based on an embodiment taking the enclosed Figures into account.

Figure 1     shows a wind power installation in a perspective view.

Figure 2     is a structural diagram of a wind turbine controller according to one aspect.

Figure 3     is a structural diagram of a wind turbine controller according to Figure 2 in more detail.

Figure 4     is a structural diagram of a wind turbine controller according to Figure 3 in more detail.

Figure 5     is a structural diagram of a wind turbine controller according to Figure 4 in more detail.

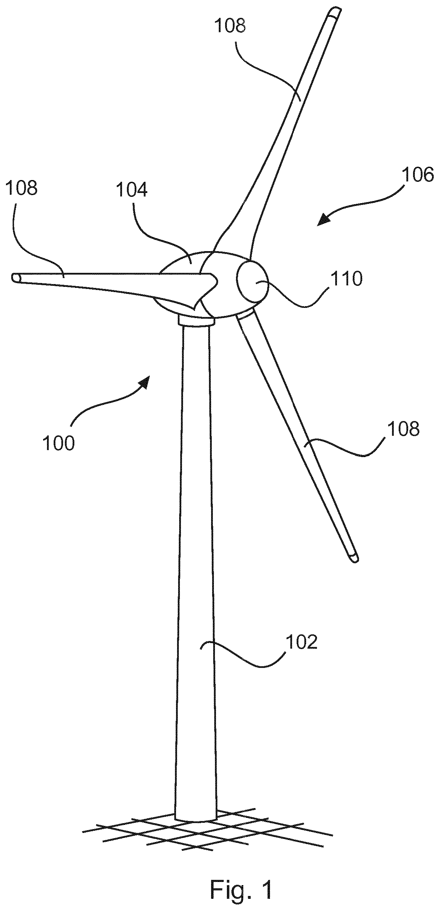

Figure 1 shows a wind power installation 100 comprising a tower 102 and a nacelle 104. A rotor 106 having three rotor blades 108 and a spinner 110 is arranged on the nacelle 104. The rotor 106 is set in rotation motion by the wind during operation and drives a generator in the nacelle 104 as a result.

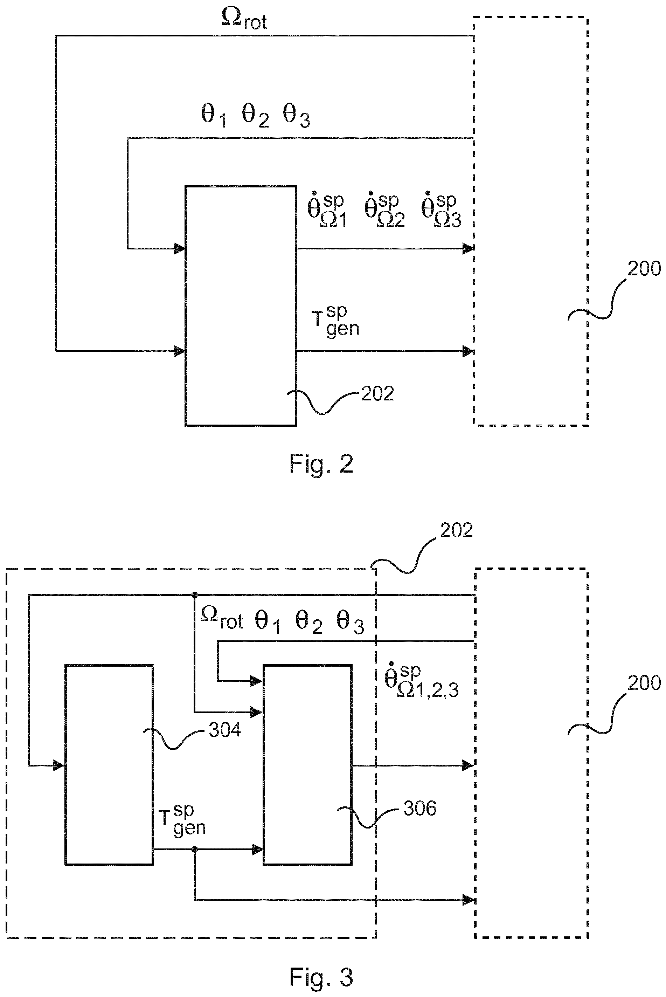

Figure 2 illustrates the control concept according to one aspect in a fairly schematic overview. Accordingly, there is the turbine block 200 basically representing the wind turbine. For controlling the wind turbine according to wind turbine block 200 there is shown a wind turbine controller 202 receiving the pitch angles of all three blades $\theta_1$, $\theta_2$ and $\theta_3$, and the measured rotor speed $\Omega_{rot}$. The wind turbine is according to one aspect a direct drive wind turbine.

Based on the measured blade angles and the measured rotor speed the wind turbine controller 202 outputs a pitch rate setpoint for each of the three rotor blades $\dot{\theta}_{\Omega 1}^{sp}$, $\dot{\theta}_{\Omega 2}^{sp}$, $\dot{\theta}_{\Omega 3}^{sp}$ and the generator torque setpoint $T_{gen}^{sp}$. These setpoints are inserted in the turbine block 200 and will there be considered accordingly. I.e. the pitch actuators will operate according to the pitch rate setpoint and the generator torque will also be set according to its setpoint. Preferably the generator is a synchronous generator with permanent magnets. In this case the generator torque is adjusted by means of adjusting at least one stator current.

Figure 3 shows some more details of Figure 2 and the wind turbine controller 202 of Fig-ure 2 is illustrated in Figure 3 as a rectangular with a dashed line.

Accordingly, the wind turbine controller includes a generator torque controller 304 and a pitch rate controller 306. The generator torque controller 304 just receives the rotor speed $\Omega_{rot}$. Based on that the generator torque controller generates the generator torque setpoint $T_{gen}^{sp}$. The generator torque setpoint is inserted into the turbine block 200 but it is also used and thus inserted in the pitch rate controller 306.

The pitch rate controller 306 also receives the rotor speed $\Omega_{rot}$ and the measured blade angles $\theta_1$, $\theta_2$ and $\theta_3$. Based on that the pitch rate controller 306 calculates the pitch rate setpoint for all three blades and inserts this into the turbine block 200. Again, the wind turbine is thus controlled accordingly.

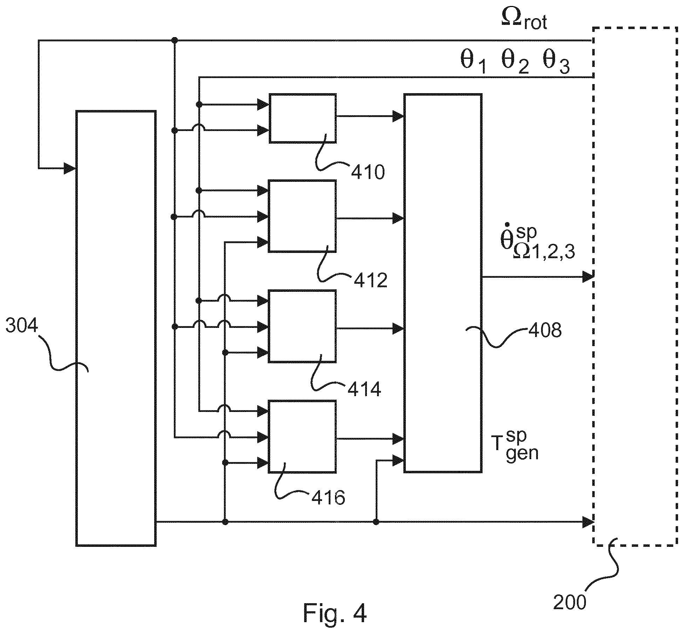

In Figure 4 further details of the pitch rate controller 306 according to Figure 3 are shown. The turbine block 200 as well as the generator torque controller 304 are illustrated in the same manner as in Figure 3. However, the pitch rate

# EP 3 647 587 B1

controller 306 according to Figure 3 is split into a pitch constraints block 408 and several blocks each outputting in individual pitch rate setpoint. Accordingly, there is a pitch angle controller 410 outputting a pitch rate setpoint in order to control the pitch angle. This pitch rate setpoint is denoted by a pitch angle pitch rate setpoint. For controlling the rotor speed there is the rotor speed controller 412 outputting a pitch rate in order to control the rotor speed. The pitch rate setpoint outputted by the rotor speed controller 412 is denoted by a rotor speed pitch rate setpoint.

For controlling the rotor power there is a rotor power controller 414 outputting a pitch rate setpoint in order to control the rotor power. That pitch rate setpoint is denominated rotor power pitch rate setpoint.

For controlling the rotor thrust, in particular for limiting the rotor thrust, there is provided a rotor thrust controller 416. Again the rotor thrust controller 416 also controls the rotor thrust by outputting a pitch rate setpoint. That pitch rate setpoint is denominated as rotor thrust pitch rate setpoint.

All four pitch rate setpoints, i.e. the pitch angle pitch rate setpoint, the rotor speed pitch rate setpoint, the rotor power pitch rate setpoint and the rotor thrust pitch rate setpoint are inserted into the pitch constraints block 408. The pitch constraints block 408 basically generates one pitch rate setpoint for each blade to be submitted to the turbine block 200. Accordingly, the pitch rate setpoint outputted by the pitch constraints block 408 is generally the result of said four pitch rate setpoints inputted into the pitch constraints block 408.

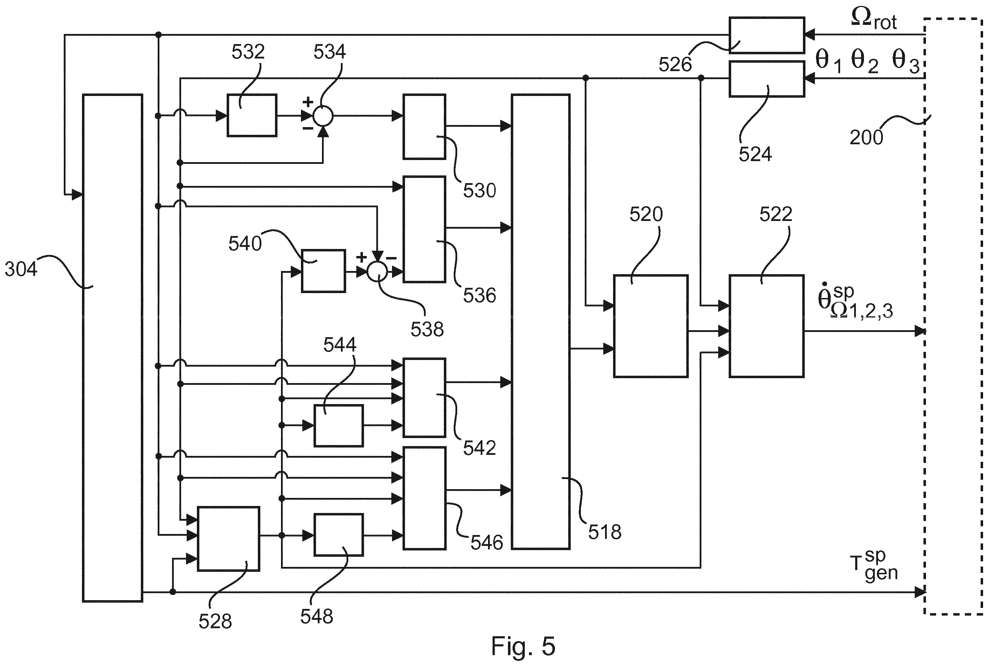

However, the pitch angle controller 410, the rotor speed controller 412, the rotor power controller 414 and the rotor thrust controller 416 may not be operating all at the same time. The rotor thrust controller 416 provides a minimum value. However, the rotor thrust pitch rate setpoint may particularly only be a limit. Accordingly, the final pitch rate setpoint, outputted by the rotor thrust constraints block 518 of figure 5, should always be at or above the value of the rotor thrust pitch rate setpoint. In other words, if any pitch rate setpoint falls and reaches that limit of the rotor thrust controller 416, i.e. falls below the rotor thrust pitch rate setpoint, this limit overrules any other pitch rate setpoints and avoids the pitch rate setpoint to become even smaller.

The pitch angle controller 410 is preferably only active during subrated mode, whereas the rotor speed controller 412 and the rotor power controller 414 may only be active during transient mode and rated mode. Accordingly, the control concept may switch between the pitch angle controller 410 on the one hand and the rotor speed controller 412 and the rotor power controller 414 on the other hand.

One possibility to consider the rotor speed pitch rate setpoint and the rotor power pitch rate setpoint at the same time is to add both pitch rate setpoints together in a weighted function. Underlying this concept is the idea that rotor speed and rotor power will basically be at least partially coupled and thus both pitch rate setpoints may also be similar, at least they will usually have the same prefix, i.e. both be positive or both be negative at the same time.

The pitch constraints block 408 also considers the generator torque setpoint generated by the generator torque controller 304. The pitch constraints block 408 makes use of the wind speed estimator and the wind speed estimator makes use of the generator torque setpoint.

Figure 5 shows further details of the control structure. The turbine block 200 and the generator torque controller 304 are illustrated the same way as in the previous Figure 4. Figure 5 shows more details on how to generate the pitch angle pitch rate setpoint, the rotor speed pitch rate setpoint, the rotor power pitch rate setpoint and the rotor thrust pitch rate setpoint. The pitch constraints block 408 is also shown in more detail. However, said four pitch rate setpoints still form the input and are according to Figure 5 inputted into a rotor thrust constraints block 518. The rotor thrust constraints block basically forms one single pitch rate setpoint and this is calculated in that way that the rotor thrust pitch rate setpoint is considered as a limit. The result is inputted into the pitch angle synchronization block 520, which also considers the measured pitch angles of all blades.

The pitch angle synchronization block 520 thus outputs a pitch rate setpoint also considering all measured pitch angles and inputs this result into a limitation block 522. The limitation block 522 provides a pitch angle limitation, a pitch rate limitation and a pitch acceleration limitation. Accordingly, if the pitch rate setpoint provided by the pitch angle synchronization block 520 is somehow resulting in exceeding any of said limits, the pitch rate setpoint will be amended accordingly. The limitation block 522 therefore considers the measured pitch angles and it also considers an estimated wind speed.

In Figure 5 there is also as a further detail shown that the measured pitch angles are also filtered by a pitch angle filter 524. The measured rotor speed is also filtered by a rotor speed filter 526.

The estimated wind speed is provided by a wind speed estimator 528. The wind speed estimator receives as its input variables the measured rotor speed, the measured pitch angles and the generator torque setpoint. The wind speed estimator 528 basically works such that an equilibrium is found according to which the generator torque setpoint matches a rotor torque which depends on the measured rotor speed and the measured pitch angles.

The wind speed may be estimated depending on the rotor speed, the pitch angle and the generator torque setpoint. According to one aspect a look-up-table may be used having said three variable as input variables

For calculating the pitch angle pitch rate setpoint there is provided a pitch angle block 530 that transforms a pitch angle difference to a pitch rate. The pitch angle difference is received by substracting from a pitch angle setpoint which is calculated by means of a pitch angle setpoint block 532 a measured pitch angle. This is done in the angle substraction block 534. The pitch angle setpoint block 532 just calculates a pitch angle setpoint based on the measured rotor speed.

9

For calculating the rotor speed pitch rate setpoint a rotor speed block 536 is provided that receives a measured pitch angle as well as a speed difference and based on that it calculates the rotor speed pitch rate setpoint. The rotor speed difference is calculated by substracting from a rotor speed setpoint the measured rotor speed in the speed substraction block 538. The rotor speed setpoint is calculated by the rotor speed setpoint block 540 and the rotor speed setpoint block 540 receives as its input value the estimated wind speed. Accordingly, the rotor speed setpoint is calculated just based on the estimated wind speed.

For calculating the rotor power pitch rate setpoint there is provided a rotor power block 542. The rotor power block for calculating the rotor power pitch rate setpoint considers the measured rotor speed, the measured blade angle and the estimated wind speed. The estimated wind speed is considered directly and also indirectly by considering a rotor power setpoint which is calculated by means of the rotor power setpoint block 544 based on the estimated wind speed. As can be seen the rotor power pitch rate setpoint is calculated just by a feed-forward control. There is no comparison of a set value with a corresponding measured value, such as the angle substraction block 534 or the speed substraction block 538. Thus, the rotor power pitch rate setpoint is determined by a feed-forward control.

The rotor thrust pitch rate setpoint is calculated by a rotor thrust block 546. The rotor thrust block also receives as input values the measured rotor speed, the measured pitch angle and the estimated wind speed. The rotor thrust block 546 receives the estimated wind speed also directly and indirectly by a rotor thrust setpoint determined by the rotor thrust setpoint block 548 based on the estimated wind speed. The rotor thrust pitch rate setpoint is also, as the rotor power pitch rate setpoint, determined by a feed-forward control and thus without any comparison of a set value with a measured value.

The invention or embodiments thereof can further be explained by the following Information.

In general, the following acronyms are used:

NTM:    normal turbulence model
P:    proportional (controller)
PD:    proportional-differential (controller)
PDD:    proportional-double differential (controller)
SUMA:    short unweighted moving average
LUMA:    long unweighted moving average

For power production the variable speed wind turbine having three blades with individual pitch is provided with a wind turbine controller. The wind turbine controller consists of a generator torque and pitch rate controller. The objective of the turbine controller is to optimize power production and to remain within the design loads and sound levels of the wind turbine. The optimum refers to a steady power production at rated conditions and a maximum power production at subrated conditions. Hence, the objective is divided into two control strategies:

- Subrated operation: At subrated operation the production of power is maximized.
- Rated operation: For rated operation the production of rated power is maintained.

According to one aspect a direct drive wind turbine is suggested which is equipped with 3 pitch servo drives to actuate a desired pitch rate for the 3 blades and a power converter to actuate a desired torque for the generator.

As shown in Figure 2, the wind turbine controller computes a pitch rate setpoint for the three pitch drives and a generator torque setpoint for the power converter. The controller algorithm for computing the setpoints requires the following input signals:

- The measured pitch angles of the 3 blades.
- The measured angular velocity (speed) of the rotor.

Furthermore, the controller algorithm also requires:

- A generator power setpoint as the maximum actuated generator power.
- A rotor speed ratio setpoint to limit the rotor speed setpoint.
- A sound level reduction setpoint to set sound reduced operation.
- A turbine state to communicate the turbine operation.

As illustrated in Figure 2.2, the wind turbine controller consists of a generator torque and pitch rate controller.

Details of the generator torque controller:

A generator torque setpoint is computed by means of a rotor speed measurement. The generator controller operates in the following 3 modes:

1. Subrated

For a measured rotor speed smaller than the rated generator speed the generator operates at subrated condition. A torque smaller or equal to the rated generator torque is selected from the generator speed-torque table such that the available rotor power for production is maximized.

2. Rated

For a measured rotor speed larger or equal to the rated generator speed the generator operates at rated condition. A torque smaller or equal to the rated generator torque is computed such that the rated generator power is maintained. During rated operation a transition to above-rated power is feasible if the above-rated wind condition is met. Then for a measured rotor speed larger or equal to the above-rated generator speed a torque smaller or equal to the above-rated generator torque is computed to yield above-rated generator power.

3. Transient

When the generator operates at rated condition and the measured rotor speed decreases below the rated generator speed the generator switches to a transient condition. In the transient mode the following substates are distinguished:

(a) Primary, preserve rated generator torque and return to rated operation.
(b) Secondary, if (a) is unfeasible the generator returns to subrated operation.

The substates are being spanned by a set of rotor speed and generator torque points. The generator torque controller features bridging operation to avoid excitation of the 1st tower resonance frequency caused by tower passage of the blades. The bridging operation is setup by a smooth function which reduces the generator torque setpoint near the 1st tower resonance frequency matching rotor speed.

Details of the pitch rate controller:

As shown in Figure 4, the pitch rate controller from Figure 3 can be divided into the following controllers:

- Pitch angle control
- Rotor speed control
- Rotor power control
- Rotor thrust control

The pitch rate setpoints from the controllers are subjected to pitch constraints as shown in Figure 4.
The controllers and pitch constraints from Figure 5 can be explained as follows:

The pitch angle controller from Figure 4 computes a pitch rate setpoint $\dot{\theta}_\theta^{sp}$ using a pitch angle setpoint $\theta^{sp}$ and measurement $\theta^{mv}$:

$$\dot{\theta}_\theta^{sp} = H_\theta^c \cdot \theta^{sp} \qquad (1)$$

Let $H_\theta^c$ be a proper and stable closed loop transfer function related to the pitch angle-to-pitch rate blockdiagram 530 in Figure 5. The pitch angle setpoint is obtained from a predefined rotor speed-pitch angle table between the minimum and maximum subrated generator speed. The pitch angle controller is a proportional (P) feedback controller which is designed for reference tracking to maximize power production.
During power production a wind speed $\hat{U}$ is estimated using a rotor speed and pitch angle measurement $\Omega^{mv}$, $\theta^{mv}$ and a generator torque setpoint $T_{gen}^{sp}$:

$$\hat{U} = f(\Omega^{mv}, \theta^{mv}, T_{gen}^{sp}) \qquad (2)$$

Let $f$ be the transfer function as a result of the estimation problem. The objective is to find an estimate such that the estimated rotor (aerodynamic) torque matches the reconstructed rotor (aerodynamic) torque.

By means of the estimated wind speed of eq: (2) a short unweighted moving average (SUMA) and long unweighted moving average (LUMA) wind speed is computed:

$$\widehat{U}_{suma}(k) = \frac{1}{N_s} \sum_{l=0}^{N_s-1} \widehat{U}(k-l), \qquad \widehat{U}_{luma}(k) = \frac{1}{N_l} \sum_{l=0}^{N_l-1} \widehat{U}(k-l) \qquad (3)$$

for:

$$N_s = f_s \cdot \tau_{suma}, \qquad N_l = f_s \cdot \tau_{luma}$$

Let $f_s$ the sample rate, $\tau_{suma}$ and $\tau_{luma}$ the short and long unweighted moving average time constant.

As a representation of the free upstream turbulence a normal turbulence model variance is computed by means of the LUMA wind speed. The normal turbulence model variance satisfies:

$$\sigma_{ntm}^2 = I_{ref}^2 \cdot (0.75 \cdot \widehat{U}_{luma} + 5.6)^2 \qquad (4)$$

with $I_{ref}$ the expected value of the turbulence intensity could be at 15 m/s. The rotor speed controller 412 from Figure 4 computes a pitch rate setpoint $\dot{\theta}_\Omega^{sp}$ by means of a rotor speed setpoint $\Omega_{rot}^{sp}$, measurement $\Omega^{mv}$ and pitch angle measurement $\theta^{mv}$:

$$\dot{\theta}_\Omega^{sp} = H_\Omega^c(\Omega^{mv}, \theta^{mv}) \cdot \Omega_{rot}^{sp} \qquad (5)$$

Let $H_\Omega^c$ be a proper and stable closed loop transfer function related to the rotor speed-to-pitch rate blockdiagram 536 in Figure 5. The rotor speed setpoint is obtained from a predefined wind speed-rotor speed table. For the wind speed the SUMA value of eq:3 is used bounded by:

$$\widehat{U}_{luma} - k_{\sigma-}^\Omega \cdot \sigma_{ntm} \leq \widehat{U}_{suma} \leq \widehat{U}_{luma} + k_{\sigma+}^\Omega \cdot \sigma_{ntm} \qquad (6)$$

Let $k_{\sigma-}^\Omega$ and $k_{\sigma+}^\Omega$ be a gain to scale the normal turbulence model standard deviation below and above the LUMA wind speed.

The rotor speed controller is a proportional-differential (PD) feedback controller which is designed for disturbance rejection in order to retain the demanded rotor speed setpoint. The disturbance rejection is of main concern for rotor speed values above the demanded rotor speed setpoint. Hence, the nominal PD gain values are computed for pitch angle sensitivity functions of rotor (aerodynamic) torque above the demanded operating conditions. When operating at the demanded conditions the stability conditions are pursued by amplifying the nominal PD gain values depending on the pitch angle sensitivity functions of rotor torque. Scaling of the PD gain values is known as gain scheduling.

The rotor power controller from Figure 4 computes a pitch rate setpoint $\dot{\theta}_P^{sp}$ using a rotor speed and pitch angle measurement $\Omega^{mv}$, $\theta^{mv}$ and an estimated wind speed $\widehat{U}$ and a rotor power setpoint $P_{rot}^{sp}$:

$$\dot{\theta}_P^{sp} = H_P^c(\Omega^{mv}, \theta^{mv}, \widehat{U}, P_{rot}^{sp}) \qquad (7)$$

Let $H_P^c$ be a proper and stable transfer function related to the rotor power-to-pitch rate blockdiagram in Figure 5 and where the rotor power setpoint is obtained from a predefined wind speed-rotor power table. For the wind speed the SUMA value of eq: (3) is used bounded by:

$$\widehat{U}_{luma} - k_{\sigma-}^P \cdot \sigma_{ntm} \leq \widehat{U}_{suma} \leq \widehat{U}_{luma} + k_{\sigma+}^P \cdot \sigma_{ntm} \qquad (8)$$

Let $k_{\sigma-}^P$ and $k_{\sigma+}^P$ be a gain to scale the normal turbulence model standard deviation below and above the LUMA wind speed.

The rotor power controller is a proportional-double differential (PDD) feed forward controller which is designed to preserve the demanded rotor power setpoint.

The rotor thrust controller from Figure 4 computes a pitch rate setpoint $\dot{\theta}_F^{sp}$ by means of a rotor speed and pitch angle measurement $\Omega^{mv}$, $\theta^{mv}$ and an estimated wind speed $\hat{U}$ and rotor thrust setpoint $F^{sp}$:

$$\dot{\theta}_F^{sp} = H_F^c(\Omega^{mv}, \theta^{mv}, \hat{U}, F^{sp}) \tag{9}$$

Let $H_F^c$ be a proper and stable transfer function related to the rotor thrust-to-pitch rate blockdiagram in Figure 5. The rotor thrust setpoint is obtained from a predefined wind speed-rotor thrust table. For the wind speed the SUMA value of eq: (3) is used bounded by:

$$\hat{U}_{luma} - k_{\sigma-}^F \cdot \sigma_{ntm} \leq \hat{U}_{suma} \leq \hat{U}_{luma} + k_{\sigma+}^F \cdot \sigma_{ntm} \tag{10}$$

Let $k_{\sigma-}^F$ and $k_{\sigma+}^F$ be a gain to scale the normal turbulence model standard deviation below and above the LUMA wind speed. The rotor thrust controller is a PDD feed forward controller which is designed for load limitation by constraining the estimated rotor thrust to the maximum rotor thrust and reducing the rate of rotor thrust change.

According to Figure 5, the pitch rate setpoints from the pitch angle, rotor speed, rotor power and rotor thrust control are subjected to the following set of constraints:

- Rotor thrust constraint
- Pitch angle synchronize
- Pitch angle, rate and acceleration limitation

During power production the rotor thrust constraint selects the pitch rate setpoint which yields the smallest rate of rotor thrust change.

The pitch rate setpoints for the 3 blades are corrected through a P feedback controller such that the 3 pitch angles are synchronized to at least the threshold level for synchronization.

To determine the operation boundaries for power production limitations are introduced for pitch angle, rate and acceleration. The boundaries are defined by pitch-to-work and pitch-to-vane limits. Consider Table 1 for an overview of the limits.

Table 1: The pitch angle, rate and acceleration limitations.

| | **Pitch limitation** | |
|---|---|---|
| | **Subrated production** | **Rated production** |
| **Pitch-to-vane** | | |
| Acceleration | Constant | Constant |
| Rate | Constant | Constant |
| Angle | Constant | Constant |
| **Pitch-to-work** | | |
| Acceleration | Constant | Constant |
| Rate | Constant | Variable |
| Angle | Constant | Variable |

The pitch-to-work rate limit for rated production is obtained from a predefined rotor speed-pitch rate table. For the pitch-to-work angle limit a minimal tip speed ratio to pitch angle boundary is introduced. The minimal tip speed ratio is transformed in a tip speed ratio-minimal pitch angle table.

The measured pitch angle and rotor speed are subjected to filter operations to make them suitable for control actions. The filters are designed to suppress disturbances from structural and generator dynamics, respectively blade and tower bending modes and generator imbalance motions.

Accordingly, at least one aspect suggests a direct drive wind turbine being equipped with a control system to actuate a desired pitch rate for the 3 blades and a desired torque for the generator. The wind turbine controller of the control system is designed to optimize power production and to handle multiple operation objectives, with the structural integrity being guaranteed as far as possible.

For subrated power production the available rotor power for production is maximized using the generator torque, pitch angle and rotor thrust controller. Additionally, at rated power production one attempts to maintain rated generator power by using the generator torque, rotor speed, rotor power and rotor thrust controller. Finally, all demanded pitch rates are subjected to a set of constraints.

**Claims**

1.  Method for controlling a wind turbine, the wind turbine having a generator with controllable generator torque and an aerodynamic rotor (106) with rotor blades (108) with adjustable pitch angle, the aerodynamic rotor driving the generator with variable rotor speed depending on a wind speed, comprising the steps

    - operating the wind turbine in a subrated mode when the wind speed is below a predetermined rated wind speed,
    - operating the wind turbine in a rated mode when the wind speed is at or above the predetermined rated wind speed, and
    - estimating the wind speed
    **characterized by**
    - operating the wind turbine in subrated mode or in rated mode in dependence on the estimated wind speed, wherein
    - the decision whether the wind turbine is operated in subrated mode or in rated mode is based on the estimated wind speed, and wherein
    - at least in subrated mode and in rated mode
    - a wind speed is estimated and
    - based on the estimated wind speed a rotor thrust of the aerodynamic rotor is controlled in order to limit a maximum rotor thrust and/or a maximum rotor thrust change, such that
    - a rotor thrust setpoint is determined based on the estimated wind speed, wherein
    - at least in subrated mode the set value for the pitch angle is determined based on a predetermined relationship between rotor speed values and pitch angle values by using a look-up-table.

2.  Method according to claim 1, further comprising the step

    - operating the wind turbine in a transient mode, when the operating mode changes over from subrated mode to rated mode or back, wherein
    - operating the wind turbine in subrated mode, in transient mode or in rated mode depending on the estimated wind speed.

3.  Method according to claim 1 or claim 2, further comprising the steps

    - measuring the rotor speed,
    - in subrated mode

        - determining a set value for the pitch angle depending on the measured rotor speed ($\Omega_{rot}$), and/or
        - determining a generator torque setpoint ($T_{gen}^{sp}$) based on the measured rotor speed ($\Omega_{rot}$),

    - adjusting the pitch angles of the rotor blades (108) depending on the set value for the pitch angle and/or
    - adjusting the generator torque depending on the determined torque setpoint.

4.  Method according to any of the preceding claims, wherein the generator is designed as a direct driven synchronous generator, in particular having a generator rotor with permanent magnets.

5.  Method according to any of the preceding claims wherein

    - at least in rated mode and/or in transient mode, when the operating mode changes over from subrated mode to rated mode,

- the rotor speed is controlled based on a rotor speed setpoint ( $\Omega_{rot}^{sp}$ ) and

- the rotor speed setpoint ( $\Omega_{rot.}^{sp}$ ) is determined depending on an estimated wind speed.

6. Method according to any of the preceding claims wherein

- at least in rated mode and/or in transient mode, when the operating mode changes over from subrated mode to rated mode

- the rotor power is controlled based on a rotor power setpoint and
- the rotor power setpoint is determined depending on an estimated wind speed.

7. Method according to any of the preceding claims wherein

- for starting the wind turbine a set value for the pitch angle is determined based on a predetermined relationship between rotor speed values and pitch angle values, in particular
- by using a look-up-table, wherein the pitch angle is reduced with increasing rotor speed, in particular
- starting with an idling pitch angle of more than 20° until an operational pitch angle of less than 10° has been reached.

8. Method according to any of the preceding claims further comprising at least one or all steps of the list consisting of the steps

- for controlling the pitch angle in subrated mode a pitch angle pitch rate setpoint is determined based on a pitch angle setpoint,
- for controlling the rotor speed at least in rated mode a rotor speed pitch rate setpoint is determined based on a rotor speed setpoint ( $\Omega_{rot}^{sp}$ ),
- for controlling a rotor power at least in rated mode a rotor power pitch rate setpoint is determined based on a rotor power setpoint, and
- for controlling a rotor thrust a rotor thrust pitch rate setpoint is determined based on a rotor thrust setpoint.

9. Method according to any of the preceding claims wherein
the pitch angle is adjusted based on at least one input variable or all input variables of the list consisting of

- a measured pitch angle,
- a pitch angle pitch rate setpoint,
- a rotor speed pitch rate setpoint,
- a rotor power pitch rate setpoint, and
- a rotor thrust pitch rate setpoint, wherein in particular

- the rotor thrust pitch rate setpoint provides a minimum limit having an absolute value that may not be undercut.

10. Method according to any of the preceding claims wherein

- a rotor power is controlled in a feed-forward control based on a rotor power setpoint, in particular further based on at least one input variable or all input variables of the list consisting of

- a measured rotor speed ($\Omega_{rot}$),
- a measured pitch angle, and
- an estimated wind speed, and/or

- a rotor thrust is controlled in a feed-forward control based on a rotor thrust setpoint, in particular further based on at least one input variable or all input variables of the list consisting of

- a measured rotor speed ($\Omega_{rot}$),
- a measured pitch angle, and

- an estimated wind speed.

11. Method according to any of the preceding claims wherein

- in subrated mode the generator torque is adjusted based on a measured rotor speed ($\Omega_{rot}$),
- in transient mode the rotor power is increased with increasing wind speed based on the estimated wind speed and
- in rated mode rotor power is controlled to a constant value based on an estimated wind speed in a feed-forward control and/or a rotor thrust setpoint is decreasing with increasing wind speed and is set based on the estimated wind speed in a feed-forward control.

12. Wind turbine having

- a generator with controllable generator torque and
- an aerodynamic rotor with rotor blades (108) with adjustable pitch angle, wherein
- the aerodynamic rotor is adapted for driving the generator with variable rotor speed depending on a wind speed, further comprising
- a turbine control device for operating the wind turbine in a subrated mode when the wind speed is below a predetermined rated wind speed, and for
- operating the wind turbine in a rated mode when the wind speed is at or above the predetermined rated wind speed,
- an estimator (528) for estimating the wind speed
**characterized in that**
- the turbine control device is adapted for operating the wind turbine in subrated mode or in rated mode in dependence of the estimated wind speed, wherein
- the decision whether the wind turbine is operated in subrated mode or in rated mode is based on the estimated wind speed, and wherein
- at least in subrated mode and in rated mode
- a wind speed is estimated and
- based on the estimated wind speed a rotor thrust of the aerodynamic rotor is controlled in order to limit a maximum rotor thrust and/or a maximum rotor thrust change, such that
- a rotor thrust setpoint is determined based on the estimated wind speed, wherein
- at least in subrated mode the set value for the pitch angle is determined based on a predetermined relationship between rotor speed values and pitch angle values by using a look-up-table.

13. Wind turbine according to claim 12, wherein the wind turbine, in particular the turbine control device, is adapted to control the wind turbine with a method according to any of claims 1 to 11.

14. Wind turbine according to any of the claims 12 or 13, wherein the generator is designed as a direct driven synchronous generator, in particular having a generator rotor with permanent magnets.

**Patentansprüche**

1. Verfahren zur Steuerung einer Windenergieanlage, wobei die Windenergieanlage einen Generator mit steuerbarem Generatormoment und einen aerodynamischen Rotor (106) mit Rotorblättern (108) mit einstellbarem Pitchwinkel aufweist, wobei der aerodynamische Rotor den Generator mit variabler Rotordrehzahl in Abhängigkeit von einer Windgeschwindigkeit antreibt, mit den folgenden Schritten

- Betreiben der Windenergieanlage in einem Teillastbetrieb, wenn die Windgeschwindigkeit unter einer vorbestimmten Nennwindgeschwindigkeit liegt,
- Betreiben der Windenergieanlage in einem Nennlastbetrieb, wenn die Windgeschwindigkeit bei oder über der vorbestimmten Nennwindgeschwindigkeit liegt, und
- Schätzen der Windgeschwindigkeit
**gekennzeichnet durch**
- Betreiben der Windenergieanlage in einem Teillastbetrieb oder in einem Nennlastbetrieb in Abhängigkeit von der geschätzten Windgeschwindigkeit, wobei
- die Entscheidung, ob die Windenergieanlage im Teillastbetrieb oder im Nennlastbetrieb betrieben wird, auf der geschätzten Windgeschwindigkeit basiert, und wobei
- zumindest im Teillastbetrieb und im Nennlastbetrieb
- eine Windgeschwindigkeit geschätzt wird und
- basierend auf der geschätzten Windgeschwindigkeit ein Rotorschub des aerodynamischen Rotors gesteuert wird, um einen maximalen Rotorschub und/oder eine maximale Rotorschubänderung zu begrenzen, sodass
- ein Rotorschub-Sollwert auf der Grundlage der geschätzten Windgeschwindigkeit bestimmt wird, wobei
- zumindest im Teillastbetrieb der Sollwert für den Pitchwinkel auf der Grundlage eines vorgegebenen Verhältnisses zwischen Rotordrehzahlwerten und Pitchwinkelwerten unter Verwendung einer Nachschlagetabelle bestimmt wird.

2. Verfahren nach Anspruch 1, ferner umfassend den Schritt

- Betreiben der Windenergieanlage in einem Übergangsbetrieb, wenn die Betriebsart vom Teillastbetrieb in den Nennlastbetrieb oder zurück wechselt, wobei
- Betreiben der Windenergieanlage im Teillastbetrieb, im Übergangsbetrieb oder im Nennlastbetrieb in Abhängigkeit von der geschätzten Windgeschwindigkeit.

3. Verfahren nach Anspruch 1 oder Anspruch 2, ferner umfassend die folgenden Schritte

- Messen der Rotordrehzahl,
- im Teillastbetrieb

- Bestimmen eines Sollwerts für den Pitchwinkel in Abhängigkeit von der gemessenen Rotordrehzahl ($\Omega_{\text{rot}}$), und/oder
- Bestimmen eines Generatormoment-Sollwerts ( $T_{gen}^{sp}$ ) basierend auf der gemessenen Rotordrehzahl ($\Omega_{\text{rot}}$),

- Einstellen der Pitchwinkel der Rotorblätter (108) in Abhängigkeit vom Sollwert für den Pitchwinkel und/oder
- Einstellen des Generatormoments in Abhängigkeit vom ermittelten Drehmoment-Sollwert.

4. Verfahren nach einem der vorstehenden Ansprüche, wobei der Generator als direkt angetriebener Synchrongenerator ausgebildet ist, insbesondere mit einem Generatorrotor mit Permanentmagneten.

5. Verfahren nach einem der vorstehenden Ansprüche, wobei

- zumindest im Nennlastbetrieb und/oder im Übergangsbetrieb, wenn die Betriebsart vom Teillastbetrieb in den Nennlastbetrieb wechselt,

- die Rotordrehzahl auf der Grundlage eines Rotordrehzahl-Sollwertes ( $\Omega_{rot}^{sp}$ ) geregelt wird und
- der Rotordrehzahl-Sollwert ( $\Omega_{rot}^{sp}$ ) in Abhängigkeit von einer geschätzten Windgeschwindigkeit bestimmt wird.

6. Verfahren nach einem der vorstehenden Ansprüche, wobei

- zumindest im Nennlastbetrieb und/oder im Übergangsbetrieb, wenn die Betriebsart vom Teillastbetrieb in den Nennlastbetrieb wechselt

- die Rotorleistung auf der Grundlage eines Rotorleistungssollwerts geregelt wird und
- der Rotorleistungssollwert in Abhängigkeit von einer geschätzten Windgeschwindigkeit bestimmt wird.

7. Verfahren nach einem der vorstehenden Ansprüche, wobei

- zum Starten der Windenergieanlage ein Sollwert für den Pitchwinkel auf der Grundlage eines vorgegebenen Verhältnisses zwischen Rotordrehzahlwerten und Pitchwinkelwerten bestimmt wird, insbesondere
- unter Verwendung einer Nachschlagetabelle, wobei der Pitchwinkel mit steigender Rotordrehzahl verringert wird, insbesondere

- ausgehend von einem Leerlauf-Pitchwinkel von mehr als 20°, bis ein Betriebs-Pitchwinkel von weniger als 10° erreicht ist.

8. Verfahren nach einem der vorstehenden Ansprüche, umfassend mindestens einen oder alle Schritte der Liste, bestehend aus den folgenden Schritten

- zur Steuerung des Pitchwinkels im Teillastbetrieb wird ein Pitchwinkel-Pitchraten-Sollwert auf der Grundlage eines Pitchwinkel-Sollwerts bestimmt,
- zum Steuern der Rotordrehzahl zumindest im Nennlastbetrieb wird ein Rotordrehzahl-Pitchraten-Sollwert auf der Grundlage eines Rotordrehzahl-Sollwerts ( $\Omega_{rot}^{sp}$ ) bestimmt,
- zur Steuerung einer Rotorleistung zumindest im Nennlastbetrieb wird ein Rotorleistungs-Pitchwinkel-Sollwert auf der Grundlage eines Rotorleistungs-Sollwerts bestimmt, und
- zur Steuerung eines Rotorschubs ein Rotorschub-Pitch-Raten-Sollwert auf der Grundlage eines Rotorschub-Sollwerts bestimmt wird.

9. Verfahren nach einem der vorstehenden Ansprüche, wobei der Pitchwinkel auf der Grundlage mindestens einer Eingangsvariablen oder aller Eingangsvariablen aus der Liste bestehend aus

- einem gemessenen Pitchwinkel,
- einem Sollwert für die Pitchwinkel-Pitchrate,
- einem Rotordrehzahl-Pitchraten-Sollwert,
- einem Sollwert für die Pitchrate der Rotorleistung und
- einem Rotorschub-Pitchraten-Sollwert, wobei insbesondere

- der Sollwert für die Rotorschub-Pitchrate eine Mindestgrenze mit einem absoluten Wert vorgibt, der nicht unterschritten werden darf.

10. Verfahren nach einem der vorstehenden Ansprüche, wobei

- eine Rotorleistung in einer Steuerung auf der Grundlage eines Rotorleistungssollwerts geregelt wird, insbesondere ferner auf der Grundlage mindestens einer Eingangsgröße oder aller Eingangsgrößen der Liste, bestehend aus

- einer gemessenen Rotordrehzahl ($\Omega_{rot}$),
- einem gemessenen Pitchwinkel und
- einer geschätzten Windgeschwindigkeit und/oder

- ein Rotorschub in einer Steuerung auf der Grundlage eines Rotorschub-Sollwerts gesteuert wird, insbesondere ferner auf der Grundlage mindestens einer Eingangsgröße oder aller Eingangsgrößen der Liste bestehend aus

- einer gemessenen Rotordrehzahl ($\Omega_{rot}$),
- einem gemessenen Pitchwinkel und
- einer geschätzten Windgeschwindigkeit.

11. Verfahren nach einem der vorstehenden Ansprüche, wobei

- im Teillastbetrieb das Generatormoment auf der Grundlage einer gemessenen Rotordrehzahl ($\Omega_{rot}$) eingestellt wird,
- im Übergangsbetrieb die Rotorleistung mit zunehmender Windgeschwindigkeit auf der Grundlage der geschätzten Windgeschwindigkeit erhöht wird und
- im Nennlastbetrieb die Rotorleistung auf einen konstanten Wert geregelt wird, basierend auf einer geschätzten Windgeschwindigkeit in einer Steuerung, und/oder ein Rotorschub-Sollwert mit zunehmender Windgeschwindigkeit abnimmt und basierend auf der geschätzten Windgeschwindigkeit in einer Steuerung eingestellt wird.

12. Windenergieanlage mit

- einem Generator mit steuerbarem Generatormoment und

- einem aerodynamischen Rotor mit Rotorblättern (108) mit einstellbarem Pitchwinkel, wobei

- der aerodynamische Rotor zum Antreiben des Generators mit variabler Rotordrehzahl in Abhängigkeit von einer Windgeschwindigkeit ausgelegt ist, ferner umfassend

- eine Windenergieanlagensteuervorrichtung zum Betreiben der Windturbine in einem Teillastbetrieb, wenn die Windgeschwindigkeit unter einer vorbestimmten Nennwindgeschwindigkeit liegt, und zum

- Betreiben der Windenergieanlage in einem Nennlastbetrieb, wenn die Windgeschwindigkeit bei oder über der vorbestimmten Nennwindgeschwindigkeit liegt,

- einen Schätzer (528) zum Schätzen der Windgeschwindigkeit

**dadurch gekennzeichnet, dass**

- die Windenergieanlagensteuerungseinrichtung dazu ausgelegt ist, die Windenergieanlage in Abhängigkeit von der geschätzten Windgeschwindigkeit im Teillastbetrieb oder im Nennlastbetrieb zu betreiben, wobei

- die Entscheidung, ob die Windenergieanlage im Teillastbetrieb oder im Nennlastbetrieb betrieben wird, auf der geschätzten Windgeschwindigkeit basiert, und wobei

- zumindest im Teillastbetrieb und im Nennlastbetrieb

- eine Windgeschwindigkeit geschätzt wird und

- basierend auf der geschätzten Windgeschwindigkeit ein Rotorschub des aerodynamischen Rotors gesteuert wird, um einen maximalen Rotorschub und/oder eine maximale Rotorschubänderung zu begrenzen, sodass

- ein Rotorschub-Sollwert auf der Grundlage der geschätzten Windgeschwindigkeit bestimmt wird, wobei

- zumindest im Teillastbetrieb der Sollwert für den Pitchwinkel auf der Grundlage eines vorgegebenen Verhältnisses zwischen Rotordrehzahlwerten und Pitchwinkelwerten unter Verwendung einer Nachschlagetabelle bestimmt wird.

13. Windenergieanlage nach Anspruch 12, wobei die Windenergieanlage, insbesondere die Windenergieanlagensteuerung, dazu ausgelegt ist, die Windenergieanlage mit einem Verfahren nach einem der Ansprüche 1 bis 11 zu steuern.

14. Windenergieanlage nach einem der Ansprüche 12 oder 13, wobei der Generator als direkt angetriebener Synchrongenerator ausgebildet ist, insbesondere mit einem Generatorrotor mit Permanentmagneten.

## Revendications

1. Procédé de commande d'une éolienne, l'éolienne présentant un générateur à couple de générateur pouvant être commandé et un rotor aérodynamique (106) à pales de rotor (108) à angle de tangage réglable, le rotor aérodynamique entraînant le générateur avec une vitesse de rotor variable en fonction d'une vitesse du vent, comprenant les étapes suivantes

- le fonctionnement de l'éolienne en mode sous-nominal lorsque la vitesse du vent est inférieure à une vitesse nominale prédéterminée,

- le fonctionnement de l'éolienne en mode nominal lorsque la vitesse du vent est supérieure ou égale à la vitesse nominale prédéterminée, et

- l'estimation de la vitesse du vent

**caractérisé par**

- le fonctionnement de l'éolienne en mode sous-nominal ou en mode nominal en fonction de la vitesse du vent estimée, dans lequel

- la décision de faire fonctionner l'éolienne en mode sous-nominal ou en mode nominal est basée sur la vitesse du vent estimée, et dans lequel

- au moins en mode sous-nominal et en mode nominal

- une vitesse du vent est estimée et

- sur la base de la vitesse du vent estimée, une poussée de rotor du rotor aérodynamique est commandée afin de limiter une poussée de rotor maximale et/ou un changement de poussée de rotor maximal, de manière à ce que

- une consigne de poussée de rotor est déterminée sur la base de la vitesse du vent estimée, dans lequel

- au moins en mode sous-nominal, la valeur de consigne pour l'angle de tangage est déterminée sur la base d'une relation prédéterminée entre des valeurs de vitesse de rotor et des valeurs d'angle de tangage à l'aide d'un tableau de correspondance.

2. Procédé selon la revendication 1, comprenant en outre l'étape suivante

- le fonctionnement de l'éolienne en mode transitoire, lorsque le mode de fonctionnement passe du mode sous-nominal au mode nominal ou vice versa, dans lequel
- le fonctionnement de l'éolienne en mode sous-nominal, en mode transitoire ou en mode nominal en fonction de la vitesse du vent estimée.

**3.** Procédé selon la revendication 1 ou 2, comprenant en outre les étapes suivantes

- la mesure de la vitesse de rotor,
- en mode sous-nominal

- la détermination d'une valeur fixe pour l'angle de tangage en fonction de la vitesse de rotor mesurée ($\Omega_{rot}$), et/ou

- la détermination d'une consigne de couple de générateur ( $T_{gen}^{sp}$ ) sur la base de la vitesse de rotor mesurée ($\Omega_{rot}$),

- l'ajustement des angles de tangage des pales de rotor (108) en fonction de la valeur de consigne de l'angle de tangage et/ou
- l'ajustement du couple de générateur en fonction de la consigne de couple déterminée.

**4.** Procédé selon l'une quelconque des revendications précédentes dans lequel le générateur est conçu comme un générateur synchrone à entraînement direct, en particulier présentant un rotor de générateur à aimants permanents.

**5.** Procédé selon l'une quelconque des revendications précédentes dans lequel

- au moins en mode nominal et/ou en mode transitoire, lorsque le mode de fonctionnement passe du mode sous-nominal au mode nominal,

- la vitesse de rotor est commandée sur la base d'une consigne de vitesse de rotor ( $\Omega_{rot}^{sp}$ ) et

- la consigne de vitesse de rotor ( $\Omega_{rot}^{sp}$ ) est déterminée en fonction d'une vitesse du vent estimée.

**6.** Procédé selon l'une quelconque des revendications précédentes dans lequel

- au moins en mode nominal et/ou en mode transitoire, lorsque le mode de fonctionnement passe du mode sous-nominal au mode nominal

- la puissance de rotor est commandée sur la base d'une consigne de puissance de rotor et
- la consigne de puissance de rotor est déterminée en fonction d'une vitesse du vent estimée.

**7.** Procédé selon l'une quelconque des revendications précédentes dans lequel

- pour démarrer l'éolienne, une valeur de consigne pour l'angle de tangage est déterminée sur la base d'une relation prédéterminée entre des valeurs de vitesse de rotor et des valeurs d'angle de tangage, en particulier
- à l'aide d'un tableau de correspondance, dans lequel l'angle de tangage est réduit avec l'augmentation de la vitesse de rotor, en particulier
- en commençant par un angle de tangage au ralenti supérieur à 20° jusqu'à ce qu'un angle de tangage opérationnel inférieur à 10° soit atteint.

**8.** Procédé selon l'une quelconque des revendications précédentes comprenant en outre au moins une ou toutes les étapes de la liste composée des étapes suivantes

- pour commander l'angle de tangage en mode sous-nominal une consigne de taux de tangage d'angle de tangage est déterminée sur la base d'une consigne d'angle de tangage,
- pour commander la vitesse de rotor, au moins en mode nominal une consigne de taux de tangage de vitesse de rotor est déterminée sur la base d'une consigne de vitesse de rotor ( $\Omega_{rot}^{sp}$ ),

- pour commander une puissance de rotor au moins en mode nominal une consigne de taux de tangage de puissance de rotor est déterminée sur la base d'une consigne de puissance de rotor, et
- pour commander une poussée de rotor, une consigne de taux de tangage de poussée de rotor est déterminée sur la base d'une consigne de poussée de rotor.

**9.** Procédé selon l'une quelconque des revendications précédentes dans lequel
l'angle de tangage est ajusté sur la base d'au moins une variable d'entrée ou de toutes les variables d'entrée de la liste suivante

- un angle de tangage mesuré,
- une consigne de taux de tangage d'angle de tangage,
- une consigne de taux de tangage de vitesse de rotor,
- une consigne de taux de tangage de puissance de rotor, et
- une consigne de taux de tangage de poussée de rotor, dans lequel en particulier

- la consigne de taux de tangage de poussée de rotor fixe une limite minimale dont la valeur absolue ne peut pas être dépassée.

**10.** Procédé selon l'une quelconque des revendications précédentes dans lequel

- une puissance de rotor est commandée par une commande par anticipation sur la base d'une consigne de puissance de rotor, en particulier en outre sur la base d'au moins une variable d'entrée ou de toutes les variables d'entrée de la liste suivante
- une vitesse de rotor mesurée ($\Omega_{rot}$),
- un angle de tangage mesuré, et
- une vitesse du vent estimée, et/ou
- une poussée de rotor est commandée par une commande par anticipation sur la base d'une consigne de poussée de rotor, en particulier en outre sur la base d'au moins une variable d'entrée ou de toutes les variables d'entrée de la liste suivante
- une vitesse de rotor mesurée ($\Omega_{rot}$),
- un angle de tangage mesuré, et
- une vitesse du vent estimée.

**11.** Procédé selon l'une quelconque des revendications précédentes dans lequel

- en mode sous-nominal le couple de générateur est ajusté sur la base d'une vitesse de rotor mesurée ($\Omega_{rot}$),
- en mode transitoire la puissance de rotor augmente avec la vitesse du vent sur la base de la vitesse du vent estimée et
- en mode nominal la puissance de rotor est commandée à une valeur constante sur la base d'une vitesse du vent estimée par une commande par anticipation et/ou une consigne de poussée de rotor diminue avec l'augmentation de la vitesse du vent et est définie sur la base de la vitesse du vent estimée par une commande par anticipation.

**12.** Éolienne présentant

- un générateur avec couple de générateur pouvant être commandé et
- un rotor aérodynamique avec des pales de rotor (108) à angle de tangage ajustable, dans laquelle
- le rotor aérodynamique est adapté pour entraîner le générateur à une vitesse de rotor variable en fonction de la vitesse du vent, comprenant en outre
- un dispositif de commande d'éolienne permettant de faire fonctionner l'éolienne en mode sous-nominal lorsque la vitesse du vent est inférieure à une vitesse du vent nominale prédéterminée, et pour
- faire fonctionner l'éolienne en mode nominal lorsque la vitesse du vent est supérieure ou égale à la vitesse du vent nominale prédéterminée,
- un estimateur (528) pour estimer la vitesse du vent **caractérisée en ce que**
- le dispositif de commande d'éolienne est adapté pour faire fonctionner l'éolienne en mode sous-nominal ou en mode nominal en fonction de la vitesse du vent estimée, dans laquelle
- la décision de faire fonctionner l'éolienne en mode sous-nominal ou en mode nominal est basée sur la vitesse du vent estimée, et dans laquelle

- au moins en mode sous-nominal et en mode nominal
- une vitesse du vent est estimée et
- sur la base de la vitesse du vent estimée une poussée de rotor du rotor aérodynamique est commandée afin de limiter une poussée de rotor maximale et/ou un changement de poussée de rotor maximal, de manière à ce que
- une consigne de poussée de rotor est déterminée sur la base de la vitesse du vent estimée, dans laquelle
- au moins en mode sous-nominal la valeur de consigne pour l'angle de tangage est déterminée sur la base d'une relation prédéterminée entre des valeurs de vitesse de rotor et des valeurs d'angle de tangage à l'aide d'un tableau de correspondance.

13. Éolienne selon la revendication 12, dans laquelle l'éolienne, en particulier le dispositif de commande d'éolienne, est adaptée pour commander l'éolienne conformément à un procédé selon l'une quelconque des revendications 1 à 11.

14. Éolienne selon l'une quelconque des revendications 12 et 13, dans laquelle le générateur est conçu comme un générateur synchrone à entraînement direct, en particulier présentant un rotor de générateur à aimants permanents.

Fig. 1

$$\Omega_{rot}$$

$$\theta_1 \quad \theta_2 \quad \theta_3$$

$$\dot{\theta}_{\Omega 1}^{sp} \quad \dot{\theta}_{\Omega 2}^{sp} \quad \dot{\theta}_{\Omega 3}^{sp}$$

$$T_{gen}^{sp}$$

200

202

Fig. 2

202

$$\Omega_{rot} \quad \theta_1 \quad \theta_2 \quad \theta_3$$

$$\dot{\theta}_{\Omega 1,2,3}^{sp}$$

200

304

$$T_{gen}^{sp}$$

306

Fig. 3

Fig. 4

Fig. 5

EP 3 647 587 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009153614 A2
- US 5155375 A
- EP 3158190 A1
- US 2012078518 A1
- EP 3250820 A1
- CA 3011771 A1
- US 2015292483 A1
- WO 2017144631 A1